# EUROPEAN PATENT SPECIFICATION

(11) **EP 3 789 908 B1**
(45) Date of publication and mention of the grant of the patent: **27.08.2025**
(21) Application number: 19195690.3
(22) Date of filing: 05.09.2019
(51) Int. Cl.: G06V 20/56

(54) **MONO VISION SYSTEM AND METHOD FOR A MOTOR VEHICLE**
MONOSICHTSYSTEM UND -VERFAHREN FÜR EIN KRAFTFAHRZEUG
SYSTÈME DE VISION MONO ET PROCÉDÉ POUR UN VÉHICULE MOTORISÉ

(43) Date of publication of application: 10.03.2021
(73) Proprietor: Qualcomm Auto Ltd., Cambridge CB4 0WZ (GB)
(72) Inventor: ANKELHED, Daniel, 583 30 Linköping (SE)
(74) Representative: Reddie & Grose LLP

(56) References cited:
- EP-A1- 3 486 871
- LIANOS KONSTANTINOS-NEKTARIOS ET AL: "VSO: Visual Semantic Odometry", 6 October 2018, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 246 - 263, ISBN: 978-3-642-17318-9, XP047489245
- "Springer tracts in advanced robotics", vol. 92, 1 January 2014, BERLIN ; HEIDELBERG ; NEW YORK : SPRINGER, 2003-, DE, ISSN: 1610-7438, article JI ZHANG ET AL: "Robust Monocular Visual Odometry for a Ground Vehicle in Undulating Terrain", pages: 311 - 326, XP055667456, DOI: 10.1007/978-3-642-40686-7_21

## Description

The invention relates to a mono vision system for a motor vehicle, comprising a mono camera adapted to capture images from a surrounding of the motor vehicle, and a processing device adapted detect object candidates in the surrounding of the motor vehicle by processing images captured by said mono camera. The invention also relates to a corresponding vision method.

It is often desired to be able to estimate for example the distance to, or the width of, a vehicle in front of the ego car.

There are some common ways to estimate the distance to an object detected in an image that is captured using a camera mounted in a vehicle. One way is to assume that the observed vehicle has a typical width that is common for that type of vehicle and then use that assumed width together with the bounding box in the image to compute the distance to the vehicle. Another way is to assume that the road is approximately flat and that the mounting angles of the camera relative to the ground are known to compute the distance to the vehicle and its width. Both mentioned ways to compute the distance and width obviously result in erroneous estimates in scenarios where the assumptions are not valid, i.e., when the width of the observed vehicle differs from the assumed width or when the road is not approximately flat. A third option is to use machine learning to train a network to estimate distance and width to observed objects in the image.

A method of estimating a distance to an object using a sequence of images recorded by a monocular camera is disclosed in EP 1 806 595 B1.

K.-N. Lianos et al., "VSO: Visual Semantic Odometry", 6 October 2018, Int. Conf. on Financial Cryptography and Data Security, Lecture Notes in Computer Science, p. 246-263, discloses an improved visual semantic odometry method.

The problem underlying the present invention is to provide a simple but effective system and method of estimating values like for example the distance to, or the width of, a vehicle in front of the ego car, suited to be run online for example in an Advanced Driving Assistance System (ADAS).

The invention solves this problem with the features of the independent claims.

The invention describes a system and a method that takes as input a video sequence collected by the camera in a motor vehicle. The invention enables an a-posteriori calculation of the road profile the vehicle has moved on from an already collected video sequence, without use of external reference sensors like lidar, radar or a global satellite navigation device. The resulting output may be a 3D profile which describes the road that the vehicle has been driving on through the entire video sequence relative to the camera. The calculated road profile can advantageously be used for several applications in a drivers assistance system, as will be explained later.

The invention is based on the realization that in each time moment, the ground below the vehicle can be assumed to be flat. This means that the method can estimate where the ground is below the 3D camera trajectory through the entire sequence. For this it is advantageous to know the mounting position and/or the mounting angles of the camera in the vehicle. Preferably, therefore, the processing device is adapted to calculate the road profile from the camera motion profile using the mounting position and/or the mounting angles of the camera in the motor vehicle. Also preferably, the processing device is adapted to use the current suspension offset of the vehicle wheels, respectively, in the calculation of said road profile from said camera motion profile, in order to improve accuracy. Odometer data from the wheels are preferably used in the calculation of the camera motion.

In some embodiments, the camera motion profile is calculated by stacking subsequent camera motions from time frame m to m+1, m+1 to m+2, ..., n-1 to n. This is a simple method for estimating the motion of the camera through the entire video sequence.

In other embodiments, the camera motion profile can be calculated with higher precision from all images between time frames m and n by using anti-causal visual odometry. Anti-causal visual odometry algorithms are known in general to the skilled person.

Preferably, the processing device is adapted to calculate the distance to the object under inspection at time m from a projection of a pixel corresponding to the bottom of the object under inspection in the image at time m onto the calculated road profile. The distance at a past time m is a valuable information since it allows to calculate other information useful in a driver assistance system. In particular, the processing device is preferably adapted to calculate the width of the object under inspection from the calculated distance at time m and the width of the object candidate in the image at time m. Alternatively or in addition, the processing device is preferably adapted to calculate the height of the object under inspection from said calculated distance at time m and the height of the object candidate in the image at time m. In order to have the width and/or the height of the object candidate in the image at time m available for later calculations after time n, the processing device is preferably adapted to store information relating to the bounding box of the particular object candidate at time frame m in a digital memory.

The width and/or height of a detected object at a past time m is a valuable information since it allows to calculate other information useful in a driver assistance system. For example, the calculated width and/or height of the object under inspection can advantageously be used to calculate the current distance to the object under inspection after time frame n in real time. The current distance to an object under inspection is a valuable information in a monocular vision system, since it cannot be obtained from a disparity image like in a stereo vision system. An advantageous application of this aspect of the invention is an Adaptive Cruise Control (ACC) system, where the distance to a vehicle driving in front of the ego vehicle shall be kept constant.

Summarizing the above, given the complete rigid body transformation, i.e. rotation and translation, of the camera motion between consecutive frames, a transformation between arbitrary frames up to the latest one can be computed. The transformation from the camera to the ground under the front wheels is typically also available, which allows for a non-causal estimation of the road topology. Given an estimation of the road topology together with an image measurement of the bounding box of the vehicle in front of the ego vehicle, the distance can be computed accurately. Given this distance to the vehicle and the bounding box, for example the vehicle width can be computed. The vehicle width is typically constant over time, which is why it is interesting to estimate it non-causally.

To estimate the width of a vehicle in front of the ego vehicle the following steps are preferably taken:
a) In a frame m, store the bounding box coordinates.
b) In each frame i where m < i <= n, calculate and store the rigid body transformation of the camera from frame i-1 to i and the transformation to the ground under the front wheels. Let n be a large enough frame number that allows the ego vehicle to travel past the location where the vehicle (more particularly, the back of the vehicle) in front was at frame m. This allows estimation of the road topology or profile of the ground where the ego vehicle has traveled from frame m to frame n.
c) Use the estimated road topology or profile to compute the distance at frame m between the ego vehicle and the vehicle in front. Also estimate the width of the vehicle in front, which can be assumed to constant over time, using the bounding box width.

In step b) above, alternatively to calculating all rigid body transformations from i-1 to i, the road topology or road profile could be calculated in a unified manner from all images i where m < i <= n using an anti-casual visual odometry algorithm.

Note that this process can be repeated an arbitrarily number of times to obtain several samples of estimated vehicle widths.

The suggested method does not use assumptions about vehicle width, nor that the road is flat, and thus is not affected by errors resulting from when these assumptions are not satisfied.

In the following the invention shall be illustrated on the basis of preferred embodiments with reference to the accompanying drawings, wherein:

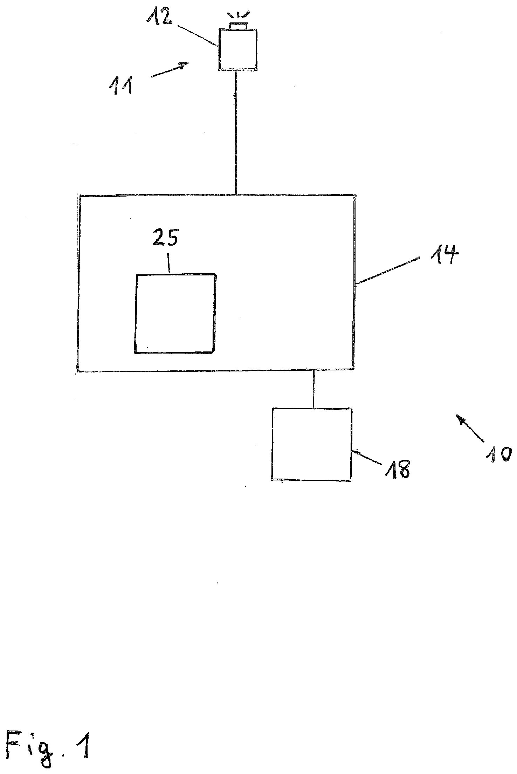

- Fig. 1: shows a schematic view of a monocular vision system;
- Fig. 2: schematically illustrates a method of estimating the width and/or height of a motor vehicle using the vision system of Figure 1; and
- Fig. 3: shows an image Im captured by the vision system of Figure 1 at time m.

The vision system 10 is mounted, or to be mounted, in or to a motor vehicle and comprises an imaging apparatus 11 for capturing images of a region surrounding the motor vehicle, for example a region in front of the motor vehicle. The imaging apparatus 11 may be mounted for example behind the vehicle windscreen or windshield, in a vehicle headlight, or in the radiator grille. The imaging apparatus 11 comprises an optical imaging device 12, in particular a camera, preferably operating in the visible wavelength range, in the infrared wavelength range, or in both visible and infrared wavelength range, where infrared covers near IR with wavelengths below 5 microns and/or far IR with wavelengths beyond 5 microns. The imaging apparatus 11 comprises one imaging device 12 forming a mono imaging apparatus 11. The imaging device 12 is preferably a fix focus camera, where the focal length f of the lens objective is constant and cannot be varied.

The imaging apparatus 11 is coupled to an on-board data processing device 14 adapted to process the image data received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11 and/or receiving the electrical signal containing the image information from the imaging apparatus 11. The data processing device 14, or part of its functions, can be realized by a System-On-Chip (SoC) device comprising, for example, FPGA, DSP, ARM, GPU and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and the imaging device 12 can be integrated into a single unit, where a one box solution including the ECU and the imaging device 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle is an autonomous vehicle adapted to drive partly or fully autonomously or automatically, and driving actions of the driver are partially and/or completely replaced or executed by the ego vehicle.

In the following, preferred embodiments of a vision method under the present invention are described with reference to Fig-ure 2.

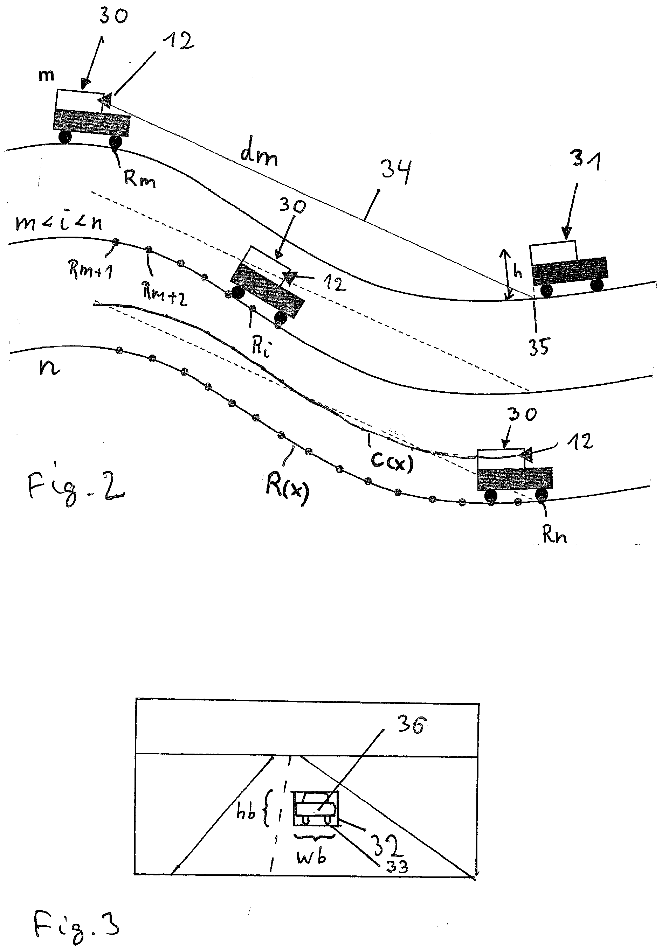

In the time frame m, the camera 12 of the ego vehicle has detected another vehicle 31 driving ahead of the ego vehicle 30 in the same direction. The processing device 14 assigns a bounding box 32 to the detected object or object candidate 31. This is shown in Figure 3. The bounding box 32 is a rectangle closely enclosing the corresponding object candidate 31 and has a width wb and a height hb. The processing device 14 stores the position and the width wb and height hb of the bounding box 32, or more generally the bounding box 32 coordinates, at the time frame m in the memory device 25.

In one embodiment, for all subsequent time frames i with m<i<=n, where i is an integer value and the number n will be explained later, the movement of the camera 12 from the previous time frame i-1 to the current time frame i is calculated and stored in the memory device 25. The movement or rigid body transformation of the camera 12 is the rotation and the translation of the camera 12 from time frame i-1 to time frame i. This can be calculated by the processing device 14 from the images corresponding to the time frames i, i+1, or from a video sequence comprising these images, using a so-called visual odometry algorithm. Visual odometry algorithms which can estimate the camera 12 motion between two subsequent camera image frames i-1, i accurately are known to the skilled person. The resulting set of camera positions Cm, ..., Cn form a camera 12 motion profile C(i) or C(x), see Figure 2.

For all time frames i, where i is an integer value with m<i<=n also the geometric transformation of the camera 12 position to a vehicle related ground position is known from the mounting position and mounting angle of the camera 12, and may be prestored in the memory device 25. By means of this geometric transformation, each camera 12 position at time i can be transformed into a vehicle related ground position, like the ground position between the front wheels, or the ground position exactly below the camera 12. The resulting sequence of ground positions Rm, Rm+1, Rm+2, ..., Ri, ..., Rn is shown in Fig-ure 2. The processing device 14 may interpolate all ground positions from Pm to Pn to achieve a continuous road profile R(x), where m<=x<=n.

In another embodiment, the processing device 14 stores all images Im, ... In captured at time frames m<=i<=n in the memory device 25, and calculates a set of ground positions Rm, Rm+1, Rm+2, ..., Ri, ..., Rn from all images Im, ... In in a unified manner by an anti-causal visual odometry algorithm after time frame n. Again, the processing device 14 may interpolate all ground positions from Pm to Pn to achieve a continuous or quasi-continuous road profile R(x), where m<=x<=n.

In a still further embodiment, the processing device 14 stores all images Im, ... In captured at time frames m<=i<=n in the memory device 25, and directly calculates a continuous road profile R(x), where m<=x<=n, from all images Im, ... In in a unified manner by an anti-causal visual odometry algorithm after time frame n.

From the calculated road profile R(i) or R(x), the processing device 14 computes the distance dm of the vehicle 31 to the camera 12 at past time m by projecting a pixel corresponding to the bottom of the object 31 under inspection in the image at time m on the calculated road profile R(x), using the mounting position and mounting angle of the camera 12. This is equivalent to finding the intersection 35 of the straight line 34 from the camera 12 to the bottom of the other vehicle 31 at time m with the road profile R(x), see top of Figure 2.

The distance dm is calculated after time frame n, which can be defined as the first time frame after the camera 12 has passed the position which the rear bottom of the other vehicle 31 had at time frame m (see top of Figure 2). Only after time frame n, the complete road profile R(x) used for calculating dm is available. The processing device 14 can estimate when time frame n has been reached or passed, in order to start calculation of the road profile R(x). The processing device 14 periodically checks whether time frame n has been reached or passed, by calculating a preliminary road profile, and checking whether the straight line 34 from the camera 12 to the bottom of the other vehicle 31 at time m intersects with the preliminary road profile.

From the calculated distance dm, the width w of the other vehicle 31 can be easily calculated using the formulas w = ch·wb·dm/f, where wb is the width of the bounding box 32 at time m in pixels, f is the focal length of the camera, and ch is a constant giving the relation between pixels and mm of the image sensor of the camera 12 in the horizontal direction. Similarly, the height h of the other vehicle 31 can be easily calculated using the formulas w = cv·hb·dm/f, where hb is the height of the bounding box 32 at time m in pixels, f is the focal length of the camera, and cv is a constant giving the relation between pixels and mm of the image sensor of the camera 12 in the vertical direction.

The width w and height h of the ongoing vehicle 31 does not change. Therefore, once the width w and height h of the other vehicle 31 has been determined, this can be used to calculate the current distance to the other vehicle 31 if it is still in front of the ego vehicle 30 after time n. In particular, using the above formulas, dk = w·f/(ch·wk), where wk is the width of the bounding box of the other vehicle 31 at a later time k>n. Alternatively, dk = h·f/(cv·hk), or a suited linear combination of both formulas, for example dk = f/2·(w/(ch·wk)+ h/(ch·hk)).

## Claims

1. A mono vision system (10) for a motor vehicle (30), comprising a mono camera (12) adapted to capture images from a surrounding of the motor vehicle (30), and a processing device (14) adapted to detect other vehicles (31) in the surrounding of the motor vehicle (30) by processing images captured by said mono camera (12), wherein said
processing device (14) is adapted to perform the following processing with respect to a particular detected other vehicle (31):
from a plurality of images spanning a period of time between a time frame m where the other vehicle (31) is visible by the camera (12) and a time frame n where the position where the other vehicle (31) was at time m has been reached or passed by the motor vehicle (30),
periodically check whether time frame n has been reached by calculating a preliminary road profile and checking whether the straight line (34) from the camera (12) to the bottom of the other vehicle (31) at time m intersects with the preliminary road profile,
calculate a camera (12) motion profile C(x) between time frame m and time frame n using a visual odometry algorithm; and
after time frame n, calculate a road profile R(x) between
time frames m and n from said calculated camera (12) motion profile C(x).

2. The mono vision system as claimed in claim 1, **characterized in that** said camera (12) motion profile C(x) is calculated by stacking subsequent camera (12) motions from time frame m to m+1, m+1 to m+2, ..., n-1 to n.

3. The mono vision system as claimed in claim 1, **characterized in that** said camera (12) motion profile C(x) is calculated from all images Im, ..., In between time frames m and n by using anti-causal visual odometry.

4. The mono vision system as claimed in any one of the preceding claims, **characterized in that** odometer data from the wheels are used in the calculation of the camera (12) motion profile C(x).

5. The mono vision system as claimed in any one of the preceding claims, **characterized in that** said processing device (14) is adapted to calculate said road profile R(x) from said camera (12) motion profile C(x) using the mounting position and/or the mounting angles of the camera (12) in the motor vehicle (30).

6. The mono vision system as claimed in any one of the preceding claims, **characterized in that** said processing device (14) is adapted to use, for each of said plurality of time frames i, the current suspension offset of the vehicle wheels in the calculation of said road profile R(x) from said camera (12) motion profile C(x).

7. The mono vision system as claimed in any one of the preceding claims, **characterized in that** said processing device (14) is adapted to calculate the distance dm to the other vehicle (31) under inspection at time m from an intersection (35) of a straight line (34) from the camera (12) to
the bottom of the other vehicle (31) at time m with the calculated road profile R(x).

8. The mono vision system as claimed in claim 7, **characterized in that** said processing device (14) is adapted to calculate the width w of the other vehicle (31) under inspection from said calculated distance dm at time m and the width wb of the other vehicle candidate (36) in the image at time m.

9. The mono vision system as claimed in any one of claims 7 or 8, **characterized in that** processing device (14) is adapted to calculate the height h of the other vehicle (31) under inspection from said calculated distance dm at time m and the height hb of the other vehicle candidate (36) in the image at time m.

10. The mono vision system as claimed in claim 8 or 9, **characterized in that** said calculated width w and/or height hof the other vehicle (31) under inspection is used to calculate the distance to the other vehicle (31) under inspection after time frame n.

11. The mono vision system as claimed in any one of the preceding claims, **characterized in that** said processing device (14) is adapted to store information relating to a bounding box (32) of the particular other vehicle (31) at time m.

12. A mono
vision method (10) for a motor vehicle (30), comprising capturing images from a surrounding of the motor vehicle (30) using a mono camera (12), and detecting other vehicles (31) in the surrounding of the motor vehicle (30) by processing images captured by said mono camera (12), further performing the following processing with
respect to a particular detected other vehicle (31):
from a plurality of images spanning a period of time between a time frame m where the other vehicle (31) is visible by the camera (12) and a time frame n where the position where the other vehicle (31) was at time m has been reached or passed by the motor vehicle (30), periodically checking whether time frame n has been reached by calculating a preliminary road profile and checking whether the straight line (34) from the camera (12) to the bottom of the other vehicle (31) at time m intersects with the preliminary road profile, calculating a camera (12) motion profile C(x) from time frame m to time frame n using a visual odometry algorithm; and after time frame n, calculating the road profile R(x) between time frames m and n from said calculated camera (12) motion profile C(x).

## Patentansprüche

1. Mono-Vision-System (10) für ein Kraftfahrzeug (30), das eine zum Aufnehmen von Bildern aus einer Umgebung des Kraftfahrzeugs (30) ausgelegte Monokamera (12) und ein Verarbeitungsgerät (14) umfasst, das zum Erkennen anderer Fahrzeuge (31) in der Umgebung des Kraftfahrzeugs (30) durch Verarbeiten von von der Monokamera (12) aufgenommenen Bildern ausgelegt ist, wobei das genannte Verarbeitungsgerät (14) ausgelegt ist zum Durchführen der folgenden Verarbeitung in Bezug auf ein bestimmtes erkanntes anderes Fahrzeug (31):
aus mehreren Bildern, die einen Zeitraum zwischen einem Zeitrahmen m, in dem das andere Fahrzeug (31) für die Kamera (12) sichtbar ist, und einem Zeitrahmen n überspannen, in dem die Position, an der sich das andere Fahrzeug (31) zum Zeitpunkt m befand, vom Kraftfahrzeug (30) erreicht oder passiert wurde,
periodisches Prüfen, ob der Zeitrahmen n erreicht wurde, durch Berechnen eines vorläufigen Straßenprofils, und Prüfen, ob die Gerade (34) von der Kamera (12) zum Boden des anderen Fahrzeugs (31) zum Zeitpunkt m das vorläufige Straßenprofil schneidet,
Berechnen eines Bewegungsprofils C(x) der Kamera (12) zwischen dem Zeitrahmen m und dem Zeitrahmen n mittels eines visuellen Odometriealgorithmus; und
Berechnen, nach dem Zeitrahmen n, eines Straßenprofils R(x) zwischen den Zeitrahmen m und n aus dem genannten berechneten Bewegungsprofil C(x) der Kamera (12).

2. Mono-Vision-System nach Anspruch 1, **dadurch gekennzeichnet, dass** das genannte Bewegungsprofil C(x) der Kamera (12) durch Stapeln aufeinanderfolgender Bewegungen der Kamera (12) von Zeitrahmen m bis m+1, m+1 bis m+2, ..., n-1 bis n berechnet wird.

3. Mono-Vision-System nach Anspruch 1, **dadurch gekennzeichnet, dass** das genannte Bewegungsprofil C(x) der Kamera (12) aus allen Bildern Im, ..., In zwischen den Zeitrahmen m und n mittels antikausaler visueller Odometrie berechnet wird.

4. Mono-Vision-System nach einem der vorherigen Ansprüche, **dadurch gekennzeichnet, dass** Wegmesserdaten von den Rädern bei der Berechnung des Bewegungsprofils C(x) der Kamera (12) verwendet werden.

5. Mono-Vision-System nach einem der vorherigen Ansprüche, **dadurch gekennzeichnet, dass** das genannte Verarbeitungsgerät (14) zum Berechnen des genannten Straßenprofils R(x) aus dem genannten Bewegungsprofil C(x) der Kamera (12) anhand der Montageposition und/oder der Montagewinkel der Kamera (12) im Kraftfahrzeug (30) ausgelegt ist.

6. Mono-Vision-System nach einem der vorherigen Ansprüche, **dadurch gekennzeichnet, dass** das genannte Verarbeitungsgerät (14) zur Verwendung, für jeden der genannten Mehrzahl von Zeitrahmen i, des aktuellen Aufhängungsversatzes der Fahrzeugräder bei der Berechnung des genannten Straßenprofils R(x) aus dem genannten Bewegungsprofil C(x) der Kamera (12) ausgelegt ist.

7. Mono-Vision-System nach einem der vorherigen Ansprüche, **dadurch gekennzeichnet, dass** das genannte Verarbeitungsgerät (14) zum Berechnen des Abstands dm zu dem anderen zu untersuchenden Fahrzeug (31) zum Zeitpunkt m aus einem Schnittpunkt (35) einer Geraden (34) von der Kamera (12) zum Boden des anderen Fahrzeugs (31) zum Zeitpunkt m mit dem berechneten Straßenprofil R(x) ausgelegt ist.

8. Mono-Vision-System nach Anspruch 7, **dadurch gekennzeichnet, dass** das genannte Verarbeitungsgerät (14) zum Berechnen der Breite w des anderen zu untersuchenden Fahrzeugs (31) aus dem genannten berechneten Abstand dm zum Zeitpunkt m und der Breite wb des anderen Fahrzeugkandidaten (36) in dem Bild zum Zeitpunkt m ausgelegt ist.

9. Mono-Vision-System nach Anspruch 7 oder 8, **dadurch gekennzeichnet, dass** das Verarbeitungsgerät (14) zum Berechnen der Höhe h des zu untersuchenden anderen Fahrzeugs (31) aus dem genannten berechneten Abstand dm zum Zeitpunkt m und der Höhe hb des anderen Fahrzeugkandidaten (36) in dem Bild zum Zeitpunkt m ausgelegt ist.

10. Mono-Vision-System nach Anspruch 8 oder 9, **dadurch gekennzeichnet, dass** die genannte berechnete Breite w und/oder Höhe h des anderen zu untersuchenden Fahrzeugs (31) zum Berechnen des Abstands zu dem anderen zu untersuchenden Fahrzeug (31) nach dem Zeitrahmen n verwendet wird.

11. Mono-Vision-System nach einem der vorherigen Ansprüche, **dadurch gekennzeichnet, dass** das genannte Verarbeitungsgerät (14) zum Speichern von Informationen über einen Begrenzungsrahmen (32) des bestimmten anderen Fahrzeugs (31) zum Zeitpunkt m ausgelegt ist.

12. Mono-Vision-Verfahren (10) für ein Kraftfahrzeug (30), das das Aufnehmen von Bildern aus einer Umgebung des Kraftfahrzeugs (30) mit einer Monokamera (12) und das Erkennen anderer Fahrzeuge (31) in der Umgebung des Kraftfahrzeugs (30) durch Verarbeiten von von der genannten Monokamera (12) aufgenommenen Bildern umfasst, das ferner das Durchführen der folgenden Verarbeitung in Bezug auf ein bestimmtes erkanntes anderes Fahrzeug (31) beinhaltet:
aus mehreren Bildern, die einen Zeitraum zwischen einem Zeitrahmen m, in dem das andere Fahrzeug (31) für die Kamera (12) sichtbar ist, und einem Zeitrahmen n überspannt, in dem die Position, an der sich das andere Fahrzeug (31) zum Zeitpunkt m befand, vom Kraftfahrzeug (30) erreicht oder passiert wurde,
periodisches Prüfen, ob der Zeitrahmen n erreicht wurde, durch Berechnen eines vorläufigen Straßenprofils und Prüfen, ob die Gerade (34) von der Kamera (12) zum Boden des anderen Fahrzeugs (31) zum Zeitpunkt m das vorläufige Straßenprofil schneidet,
Berechnen eines Bewegungsprofils C(x) der Kamera (12) vom Zeitrahmen m zum Zeitrahmen n mittels eines visuellen Odometriealgorithmus; und Berechnen, nach dem Zeitrahmen n, des Straßenprofils R(x) zwischen den Zeitrahmen m und n aus dem genannten berechneten Bewegungsprofil C(x) der Kamera (12).

## Revendications

1. Système de vision mono (10) pour véhicule à moteur (30), comprenant une caméra mono (12) conçue pour capturer des images d'un environnement du véhicule à moteur (30), et un dispositif de traitement (14) conçu pour détecter d'autres véhicules (31) dans l'environnement du véhicule à moteur (30) en traitant des images capturées par ladite caméra mono (12), dans lequel ledit dispositif de traitement (14) est conçu pour réaliser le traitement suivant relativement à un autre véhicule détecté particulier ( 31) :
à partir d'une pluralité d'images couvrant une période de temps comprise entre un bloc de temps m où l'autre véhicule (31) est visible par la caméra (12) et un bloc de temp n où la position où se trouvait l'autre véhicule (31) au temps m a été atteinte ou dépassée par le véhicule à moteur (30),
vérifier périodiquement que le bloc de temps n a été atteint ou non en calculant un profil de route préliminaire et en vérifiant que la ligne droite (34) allant de la caméra (12) jusqu'au bas de l'autre véhicule (31) au temps m croise ou non le profil de route préliminaire,
calculer un profil de mouvement C(x) de caméra (12) entre le bloc de temps m et le bloc de temps n à l'aide d'un algorithme d'odométrie visuelle ; et
après le bloc de temps n, calculer un profil de route R(x) entre les blocs de temps m et n à partir dudit profil de mouvement C(x) de caméra (12) calculé.

2. Système de vision mono selon la revendication 1, **caractérisé en ce que** ledit profil de mouvement C(x) de caméra (12) est calculé en empilant des mouvements de caméra (12) ultérieurs du bloc de temps m à m+1, m+1 à m+2, n-1 à n.

3. Système de vision mono selon la revendication 1, **caractérisé en ce que** ledit profil de mouvement C(x) de caméra (12) est calculé à partir de toutes les images 1m, ..., 1n entre des blocs de temps m et n par odométrie visuelle anti-causale.

4. Système de vision mono selon l'une quelconque des revendications précédentes, **caractérisé en ce que** les données d'odomètre provenant des roues sont utilisées dans le calcul du profil de mouvement C(x) de caméra (12).

5. Système de vision mono selon l'une quelconque des revendications précédentes, **caractérisé en ce que** ledit dispositif de traitement (14) est conçu pour calculer ledit profil de route R(x) à partir dudit profil de mouvement C(x) de caméra (12) à l'aide de la position de montage et/ou des angles de montage de la caméra (12) dans le véhicule à moteur (30).

6. Système de vision mono selon l'une quelconque des revendications précédentes, **caractérisé en ce que** ledit dispositif de traitement (14) est conçu pour utiliser, pour chacun de ladite pluralité de blocs de temps i, le décalage de suspension actuel des roues du véhicule dans le calcul dudit profil de route R(x) à partir dudit profil de mouvement C(x) de caméra (12).

7. Système de vision mono selon l'une quelconque des revendications précédentes, **caractérisé en ce que** ledit dispositif de traitement (14) est conçu pour calculer la distance dm jusqu'à l'autre véhicule (31) en cours d'inspection au temps m à partir d'une intersection (35) d'une ligne droite (34) allant de la caméra (12) jusqu'au bas de l'autre véhicule (31) au temps m avec le profil de route calculé R(x).

8. Système de vision mono selon la revendication 7, **caractérisé en ce que** ledit dispositif de traitement (14) est conçu pour calculer la largeur w de l'autre véhicule (31) en cours d'inspection à partir de ladite distance calculée dm au temps m et de la largeur wb de l'autre véhicule candidat (36) dans l'image au temps m.

9. Système de vision mono selon l'une quelconque des revendications 7 ou 8, **caractérisé en ce que** dispositif de traitement (14), est conçu pour calculer la hauteur h de l'autre véhicule (31) en cours d'inspection à partir de ladite distance calculée dm au temps m et de la hauteur hb de l'autre véhicule candidat (36) dans l'image au temps m.

10. Système de vision mono selon la revendication 8 ou 9, **caractérisé en ce que** ladite largeur w et/ou hauteur h calculée(s) de l'autre véhicule (31) en cours d'inspection est (sont) utilisée(s) pour calculer la distance jusqu'à l'autre véhicule (31) en cours d'inspection après le bloc de temps n.

11. Système de vision mono selon l'une quelconque des revendications précédentes, **caractérisé en ce que** ledit dispositif de traitement (14) est conçu pour stocker des informations relatives à une boîte englobante (32) de l'autre véhicule particulier (31) au temps m.

12. Procédé de vision mono (10) pour un véhicule à moteur (30), comprenant la capture d'images d'un environnement du véhicule à moteur (30) à l'aide d'une caméra mono (12), et la détection d'autres véhicules (31) dans l'environnement du véhicule à moteur (30) par le traitement d'images capturées par ladite caméra mono (12), en réalisant en outre le traitement suivant par rapport à un autre véhicule détecté particulier (31) :
à partir d'une pluralité d'images couvrant une période de temps comprise entre un bloc de temps m où l'autre véhicule (31) est visible par la caméra (12) et un bloc de temp n où la position où se trouvait l'autre véhicule (31) au temps m a été atteinte ou dépassée par le véhicule à moteur (30), vérifiant périodiquement que le bloc de temps n a été atteint ou non en calculant un profil de route préliminaire et en vérifiant que la ligne droite (34) allant de la caméra (12) jusqu'au bas de l'autre véhicule (31) au temps m croise ou non le profil de route préliminaire, calculant un profil de mouvement C(x) de caméra (12) entre le bloc de temps m et le bloc de temps n à l'aide d'un algorithme d'odométrie visuelle ; et après le bloc de temps n, calculant un profil de route R(x) entre les blocs de temps m et n à partir dudit profil de mouvement C(x) de caméra (12) calculé.
